(19) Europäisches Patentamt
European Patent Office
Office européen des brevets

(11) **EP 4 360 010 B1**

(12) **EUROPÄISCHE PATENTSCHRIFT**

(45) Veröffentlichungstag und Bekanntmachung des Hinweises auf die Patenterteilung:
**14.05.2025   Patentblatt 2025/20**

(21) Anmeldenummer: **22740276.5**

(22) Anmeldetag: **21.06.2022**

(51) Internationale Patentklassifikation (IPC):
*G02F 1/01* (2006.01)        *G02F 1/21* (2006.01)
*G06N 10/20* (2022.01)        *G06N 10/40* (2022.01)
*H04B 10/70* (2013.01)

(52) Gemeinsame Patentklassifikation (CPC):
**G02F 1/0136; G02F 1/212; G06N 10/20; G06N 10/40; H04B 10/70**

(86) Internationale Anmeldenummer:
**PCT/AT2022/060209**

(87) Internationale Veröffentlichungsnummer:
**WO 2022/266685 (29.12.2022 Gazette 2022/52)**

(54) **VERFAHREN ZUR INFORMATIONSÜBERTRAGUNG MITTELS VERSCHRÄNKTER QUANTEN SOWIE ANORDNUNG ZUR DURCHFÜHRUNG DES VERFAHRENS**

METHOD FOR INFORMATION TRANSMISSION VIA ENTANGLED QUANTA AND ARRANGEMENT FOR CARRYING OUT THE METHOD

PROCÉDÉ DE TRANSMISSION D'INFORMATIONS PAR QUANTA INTRIQUÉS ET DISPOSITIF POUR LA MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **21.06.2021   AT 505032021**

(43) Veröffentlichungstag der Anmeldung:
**01.05.2024   Patentblatt 2024/18**

(73) Patentinhaber: **Intellectual Capital and Asset Management GmbH**
**2352 Gumpoldskirchen (AT)**

(72) Erfinder: **WALLNER, Gerold**
**2352 Gumpoldskirchen (AT)**

(74) Vertreter: **Müllner, Martin et al**
**Patentanwälte**
**Martin Müllner, Markus Speringer**
**Postfach 169**
**Weihburggasse 9**
**1010 Wien (AT)**

(56) Entgegenhaltungen:
- **LU GAO ET AL: "Nonlocal Quantum Erasure of Phase Objects", ARXIV.ORG, CORNELL UNIVERSITY LIBRARY, 201 OLIN LIBRARY CORNELL UNIVERSITY ITHACA, NY 14853, 26 April 2019 (2019-04-26), XP081174289**
- **SEONGJIN HONG ET AL: "Experimental implementation of arbitrary entangled operations", ARXIV.ORG, CORNELL UNIVERSITY LIBRARY, 201 OLIN LIBRARY CORNELL UNIVERSITY ITHACA, NY 14853, 6 May 2020 (2020-05-06), XP081669506**

## Beschreibung

## Technisches Gebiet

Die vorliegende Erfindung betrifft ein Verfahren zur Informationsübertragung mittels verschränkter Quanten, die zur Interferenz befähigt sind, nämlich mittels Idler-Quanten, die mit Signal-Quanten verschränkt sind. Sie betrifft weiters eine Anordnung zur Durchführung des Verfahrens.

Die Bezeichnungen "Idler" und "Signal" sind willkürlich, es gibt keine Regel, welche der Quanten als "Idler-Quanten" und welche als "Signal-Quanten" zu bezeichnen sind. Von zwei verschränkten Quanten wird eines als "Idler" und das andere als "Signal" bezeichnet. Wenn es sich um Photonen verschiedener Frequenz handelt, kann man z.B. die Photonen niedrigerer Frequenz als "Idler" und die mit höherer Frequenz als "Signal" bezeichnen oder umgekehrt.

## Stand der Technik

## Verschränkung - Entanglement

Bekannt ist der Vorgang SPDC (spontaneous parametric down conversion) zur Erzeugung von verschränkten Photonen. Wenn ein Photon durch ein nichtlineares Medium (das ist meist ein nichtlinearer Kristall) transmittiert wird, gibt es eine Wahrscheinlichkeit, dass dieses Photon absorbiert wird und gleichzeitig zwei neue Photonen, ein Signal-Photon und ein Idler-Photon, emittiert werden. Diese beiden Photonen stehen in einer besonderen Verbindung zueinander. Sie bilden ein System verschränkter Photonen. Durch die Verschränkung müssen bestimmte Eigenschaften immer im Sinne eines gemeinsamen Systems gemeinsam betrachtet werden. Je nach Typ des SPDC-Prozesses ist zum Beispiel die Polarisation der einzelnen, im SPDC-Prozess entstandenen Photonen untereinander korreliert. Diese Korrelation gilt für alle Eigenschaften, die der Energie- und Impulserhaltung unterworfen sind (Wellenlänge, Impuls, Spin, Ort, Zeit, ...). Die Eigenschaft, z.B. Polarisation, kann in der Folge im Experiment oder in der Anwendung lokal geändert werden. Besteht zwischen der Eigenschaft und dem optischen Weg des Photons eine Korrelation, kann über diese Eigenschaft das Wissen über den Weg gesteuert werden. Auf Grund der einfachen Manipulationsmöglichkeiten der Polarisation durch optische Geräte stellt die Polarisation eine der am häufigsten zur Steuerung einer Anordnung genutzten Eigenschaften von Photonen dar.

Besonders wichtig ist, dass auch der Phasenraum verschränkter Photonen ab diesem Zeitraum für die beteiligten, miteinander verschränkten Photonen untrennbar gemeinsam ist. Dieser gemeinsame Phasenraum ist Basis für Sichtbarmachung der Nicht-Lokalität der Verschränkung mittels Interferenz (siehe für Nicht-Lokalität auch EPR-Effekt in Einstein[3]; EPR = Einstein-Podolsky-Rosen-Paradoxon). Der gemeinsame Phasenraum ist die gemeinsame Lösungsmenge der jeweiligen Phasenzustände aller verschränkten Quanten zur Erfüllung des "principle of least action" des verschränkten Systems.

Typischer Weise wird eine Anordnung entsprechend der Bezeichnung der neu entstandenen Photonen in ein Signal- und ein Idler-Subsystem geteilt. Üblich ist auch die Bezeichnung "Pump-Strahl" (pump-beam) für die Summe der auf das nichtlineare Medium einstrahlenden Photonen. Nach dem nichtlinearen Kristall werden der um den SPDC-Prozess abgeschwächte Pump-Strahl sowie Signal- und Idler-Strahl unterschieden.

LU GAO ET AL: "Nonlocal Quantum Erasure of Phase Objects" und SEONGJIN HONG ET AL: "Experimental implementation of arbitrary entangled operations"offenbaren ähnliche Verfahren zur Informationsübertragung mittels verschränkter Quanten.

## Räumliche Superposition - Spatial Superposition

Bekannt ist die Tatsache, dass die Messung von Interferenz zur Darstellung eines Zustandes eines Quantensystems, meist in Form eines Experimentes oder einer technischen Anordnung, genutzt wird. Ebenfalls bekannt sind die Voraussetzungen, die Interferenz von Photonen erfordert. Eine dieser Voraussetzungen wurde in Feynman's Lectures[4] als "alternative ways" beschrieben. Eine andere Bezeichnung ist "räumliche Superposition", was die "gleichzeitige" Nutzung verschiedener Pfade oder die Unkenntnis über den Pfadverlauf beim Vorliegen mehrerer gleichwertiger Pfadvarianten zum Ausdruck bringen soll. Eine räumliche Superposition ist die Verbindung zweier Punkte in der Raumzeit durch mehrere gleichwertige Pfade bzw. Pfadkombinationen. Das Minimum für die Anzahl gleichwertiger Pfade für eine räumliche Superposition ist zwei.

Wenn solche Pfadvarianten zum Beispiel mittels eines Strahlteilers wieder überlagert werden, kann Interferenz gemessen werden. Ist es prinzipiell möglich, den Pfad des Photons festzulegen, wird die räumliche Superposition auf einen Pfad innerhalb des Sets an Varianten reduziert. Dadurch gibt es im konkreten Fall nur mehr einen festgelegten Pfad und daher keine Interferenz.

Eine grundlegende Beschreibung zu diesem Faktum ist das Konzept des Feynman'schen Pfadintegrals (Feynman[5]).

In verschränkten Systemen wirkt eine lokale, räumliche Superposition auch für alle verschränkten Partnerphotonen.

## Zeitliche Superposition - Temporal Superposition - Causal Superposition

Für die Nicht-Lokalität eines EPR-Effektes ist es erforderlich, dass auch aus einer relativistischen Betrachtung heraus eine festgelegte zeitliche Reihenfolge zwischen Quantenoperationen, die getrennt auf die einzelnen Partner des verschränkten Systems angewendet werden und die die Sichtbarkeit von Interferenz mit beeinflussen, in einer "raum-artigen" Anordnung der relevanten Quantenoperationen nicht bestimmt werden kann. Dies kann auch als Analogie zur räumlichen Superposition (räumliche Dimensionen der Raumzeit) in der Dimension Zeit verstanden werden. Solange eine strikte kausale Reihenfolge nicht bestimmt werden kann, besteht das Potential einer nicht-lokalen Manipulation des gemeinsamen Phasenraumes der verschränkten Photonen, somit auch in raum-artiger Trennung (space-like separation).

Eine Vielzahl an Experimenten hat den nicht-lokalen Charakter des EPR-Effektes bewiesen. Dabei wurde besonders auf den Nachweis der instantanen Korrelation in raum-artiger Trennung (space-like setup) der beteiligten verschränkten Photonen Wert gelegt (z.B. Ma[6]). Abhängig vom relativistischen Bezug laufen Experimente unter dem Begriff "delayed choice" oder "late choice", wodurch die zeitliche Superposition beteiligter Quantenoperationen zum Ausdruck gebracht werden kann. Ein ebenfalls gängiger, wenn auch unterschiedlich diskutierter Begriff für solch eine Quantenoperation ist "quantum eraser". Derartige Operationen sind in der Lage, eine räumliche Superposition aufrecht zu erhalten oder die Quanten auf einen bestimmbaren Pfad zu reduzieren. Damit verbunden ist die Erfüllung oder Nichterfüllung der Voraussetzung von Interferenz und deren Messung.

## Phasenlösungsraum verschränkter Quanten - Shared Phase Solution Space of Entangled Quanta

Ausgehend von Fermat, Lagrange, Hamilton und Dirac gründet auch das Konzept Feynman's path integral (Feynman[5]) auf dem "Prinzip der kleinsten Wirkung". Dieses Prinzip gilt für ein Photon und einen bestimmbaren Pfad (Pfad: Verbindung von Anfangspunkt zu Endpunkt) genauso wie für ein Photon und eine räumliche Superposition von mindestens zwei Pfaden. Etwas komplizierter wird es bei verschränkten Photonen. Hier bilden die Pfade der einzelnen verschränkten Partner einen gemeinsamen Lösungsraum für die Phasen der Pfadintegrale der einzelnen verschränkten Partner. Das heißt, die Phase des verschränkten Partnerphotons spielt in den lokalen Interferenzen eine gleich wichtige Rolle. Die vermeintlich lokal auftretende Interferenz bei verschränkten Photonen ist somit eine nicht-lokal beeinflusste Interferenz (second order interference). Beispiele von besonderer Bedeutung sind all jene Experimente, die im Idler-Subsystem die Ununterscheidbarkeit nur durch Überlagerung der Pfade ohne Interferenzmessung in diesem Subsystem herstellen (Zou[1]; Galvez[7]; Lemos[2]). Dadurch wird eine zusätzliche Phasengruppe durch beispielsweise einen Strahlteiler zur Überlagerung und Interferenzmessung vermieden. Diese Phasengruppe, die auf Grund der Eigenschaften eines Strahlteilers

um $\pi/2$ verschoben ist, würde die Interferenzmessung des Signal-Subsystems nur mittels Koinzidenzmessung mit dem Idler-Subsystem möglich machen (Jaeger[8]).

In Lemos et. al. ist in Fig. 4 das Einbringen einer Phase $\pi$ im Idler-Subsystem (Silikon-Katze) und der Konsequenz im Signal-Subsystem zusammengefasst.

Im Quellenverzeichnis am Ende der vorliegenden Beschreibung finden sich umgesetzte Experimente mit Bezug zu dieser Erfindung.

Zwei Beispiele eignen sich besonders zum bereits erfolgten Nachweis nicht-lokaler Beeinflussung von Interferenz. In Galvez[7] wird die prinzipielle Möglichkeit unter anderem im Satz:

[... Here we demonstrate the possibility of using quantum mechanics to change the phase of the interference "remotely", i.e., via manipulations on quantum-correlated photons that are in a remote location.]

zum Ausdruck gebracht. Dieses Experiment war nicht in Hinblick auf Kommunikation entwickelt worden. Der Versuchsaufbau war so gewählt, dass Koinzidenzmessung zur Auswahl von Teilmengen der verschränkten Photonenpaare ein wesentlicher Bestandteil war. Formel (2) dieser Arbeit zeigt aber den gemeinsamen Phasenlösungsraum verschränkter Quanten im Kontext des Pfadintegrals.

Das zweite Beispiel Lemos[2] ist ebenfalls nicht zu Kommunikationszwecken entworfen worden. Die Anordnung kann auch keinen echten Vorteil aus dem nicht-lokalen Effekt ziehen. Dennoch wird die Auswirkung einer Phasenänderung im Idler-Subsystem auf die Interferenzmessung im Signal-Subsystem in Fig. 4 in beeindruckender Weise sichtbar gemacht. In diesem Experiment ist die Messung der Interferenz in einem Interferometer (in diesem Fall einem Mach-Zehnder-Interferometer) nur durch Signal-Photonen und ohne Zuhilfenahme einer Koinzidenzmessung der entscheidende Punkt.

Für den Nachweis der Nicht-Lokalität und "delayed choice" (auch für die Anordnungsvariante "late choice") finden sich zahlreiche Experimente. Ma[9] gibt dazu einen wunderbaren Überblick.

## Darstellung der Erfindung

Es ist Aufgabe der vorliegenden Erfindung, die Signalübertragungsgeschwindigkeit, insbesondere auf den Gebieten der Kommunikation und der zeitkritischen Informationsverarbeitung, unter Verwendung einer temporalen Superposition (kausalen Superposition) von Quantenoperationen selbst in relativistischen Szenarien und in relativistischer Kausalität zu verbessern.

Diese Aufgabe wird durch ein Verfahren der eingangs genannten Art dadurch gelöst, dass man eine Anordnung verwendet, die

a) mindestens eine räumliche Superposition innerhalb des Systemraumes "Pfade" vorsieht;

b) eine temporale Superposition von Quantenoperationen (quantum-eraser) vorsieht, welche die eindeutige Zuordnung der Information über die Pfade der räumlichen Superposition innerhalb des relativistischen Kausalitätsraumes aufhebt;

c) eine Superposition (Träger-Superposition) eines messbaren und kontrollierbaren Attributes der verschränkten Quanten, z.B. von deren Polarisation, vorsieht;

d) eine Manipulationsmethode dieses Attributes mit dem Phasenlösungsraum der Pfadintegrale des Systems verschränkter Quanten vorsieht, und zwar im idler-Subsystem;

e) im signal-Subsystem zwei exit-modes zur Messung der Interferenz und im idler-Subsystem nur die räumliche Überlagerung von exit-modes ohne Interferenzmessung vorsieht,

und dass man mit der Manipulationsmethode im Idler-Subsystem das Attribut verändert und die sich ändernde Interferenz im Signal-Subsystem misst.

Einer der "quantum eraser" kann durch ein Interferometer im signal-Subsystem, welches den kombinierten Zustand des verschränkten Systems von Quanten mittels "second order interference" darstellt, realisiert sein.

Je nach räumlichen Gegebenheiten kann die Latenzzeit bei dem erfindungsgemäßen Verfahren sogar negativ sein.

Kern der Erfindung ist eine Korrelierbarkeit des oben genannten Attributes (das natürlich auch verschränkt ist) mit dem Phasenlösungsraum der Pfadintegrale des Systems verschränkter Quanten, wobei das Attribut mit Hilfe einer Manipulationsmethode verändert wird.

Im Folgenden dienen Photonen als Repräsentanten von Quanten, obwohl sich die Erfindung sowohl mit Fermionen als auch mit Bosonen, also z.B. auch mit Elektronen, prinzipiell realisieren lässt. Das bevorzugte Attribut ist die Polarisation.

In diesem Fall kann eine Anordnung zur Durchführung des Verfahrens enthalten:

a) eine Photonenquelle, insbesondere einen Laser;
b) eine Quelle verschränkter Photonen, insbesondere einen nichtlinearen Kristall, der aus den Photonen des Lasers verschränkte Photonen, nämlich Signal-Photonen und Idler-Photonen, generiert;
c) ein Strahlleitsystem, das die Signal-Photonen in ein Signal-Subsystem leitet und die Idler-Photonen in ein Idler-Subsystem;
d) im Signal-Subsystem:

i) ein Interferometer;
ii) zumindest einen Detektor am Ausgang des Interferometers;

e) im Idler-Subsystem:

iii) einen Mach-Zehnder-Aligner mit zwei polarisierenden Strahlteilern, wobei in beiden Armen ein half wave plate angeordnet ist und ein Spiegel verschiebbar ist; oder einen Pancharatnam-Berry-Phase-Shifter; und
iv) nach dem Mach-Zehnder-Aligner bzw. dem Pancharatnam-Berry-Phase-Shifter einen Polarisator zur Löschung der Weg-Information im Idler-Subsystem.

Das Interferometer ist vorzugsweise ein Mach-Zehnder-Interferometer, bei dem der erste Strahlteiler ein polarisierender Strahlteiler ist und bei dem in einem der beiden Interferometerarme ein die Polarisationsebene um 90° drehendes optisches Element, insbesondere ein half wave plate, angeordnet ist. Bei solch einem Interferometer kommt es bei einem linear polarisierten einfallenden Lichtstrahl, der 45° gegen die Polarisationsrichtung des polarisierenden Strahlteilers geneigt ist, zu Interferenz, da in diesem Fall die horizontale Komponente und die vertikale Komponente in Phase sind. Bei geeigneter Justierung des Gesamtsystems gelangen alle Photonen in den Detektor Det-2. Werden jedoch die beiden Komponenten um 180° phasenverschoben (z.B. mit einem Pancharatnam-Berry Phase Shifter), tritt wieder ein linear polarisierter Lichtstrahl auf, jedoch mit einer Phasenverschiebung von 180°, welcher wiederum einen der zwei Zustände des Interferometers mit dem maximalen Kontrast darstellt. Im Rahmen der vorliegenden Erfindung wurde nun überraschender Weise gefunden, dass es gleichgültig ist, ob die Phasenverschiebung im Signal-Zweig oder im Idler-Zweig vorgenommen wird.

Das Verfahren kann auch in einer "space-like" Anordnung angewendet werden. Die vorliegende Erfindung ermöglicht die Optimierung der Signalübertragungsgeschwindigkeit und realisiert Kausalität in relativistischen Raum-Zeit-Systemen, indem zwischen zwei messbaren Zuständen gewechselt wird.

Da in der Quantenmechanik Messergebnisse in Wahrscheinlichkeiten auftreten, ist auch die Messung von Interferenz eine statistische Methode.

## Kurze Beschreibung der Zeichnungen

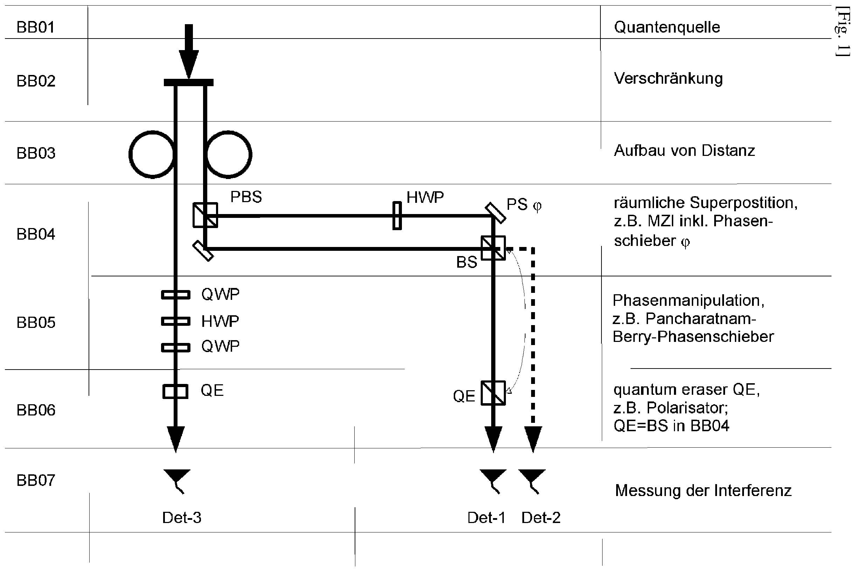

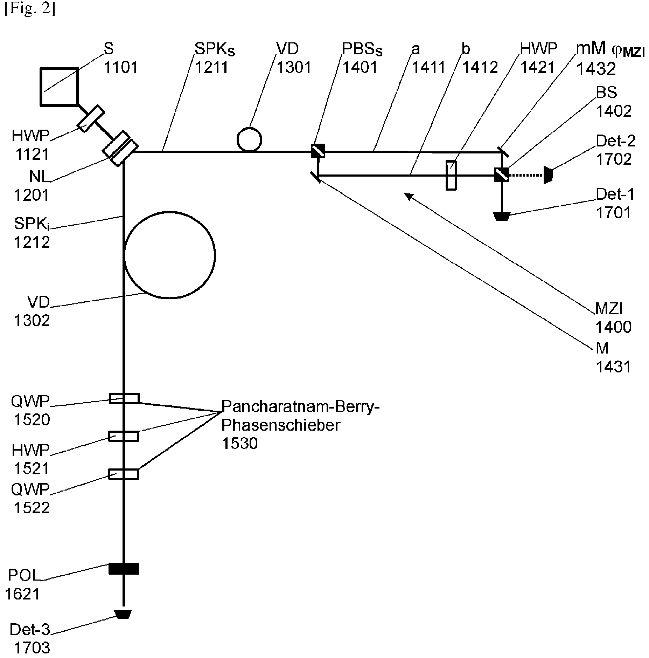

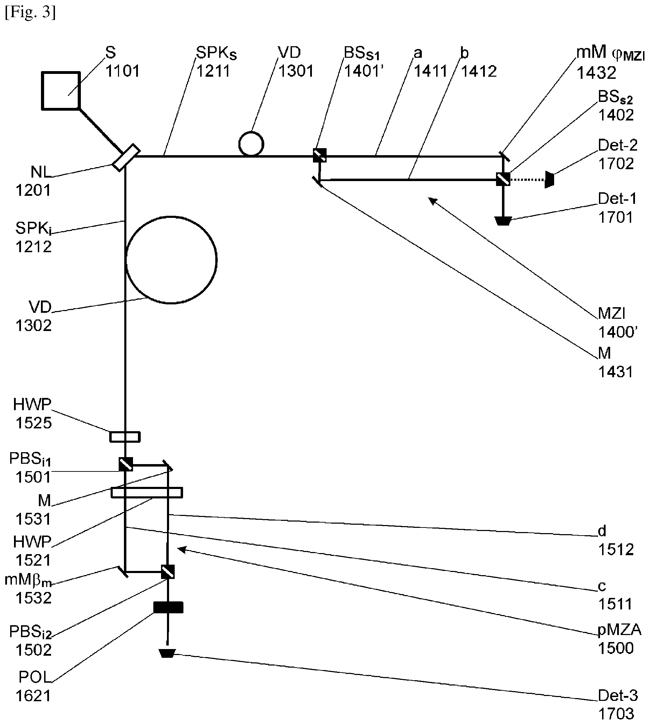

In Fig. 1 ist das Gesamtsystem mit all seinen Stufen dargestellt; Fig. 2 ist eine beispielsweise Anordnung solch eines Gesamtsystems; und Fig. 3 ist eine andere beispielsweise Anordnung solch eines Gesamtsystems.

## Weg(e) zur Ausführung der Erfindung

## Grundprinzip der Erfindung

Um die Möglichkeit einer Interferenzmessung mit nicht-lokaler Beeinflussung herzustellen, sind nachfolgende building blocks (im Folgenden BB, siehe Fig. 1) erforderlich. Entsprechend dem Stand der Technik kann bei einigen Elementen der Anordnung die Reihenfolge der Elemente, mit denen die Photonen wechselwirken, vertauscht werden, ohne dadurch das Verfahren prinzipiell beziehungsweise den Endzustand zu verändern.

### BB01) Quantenquelle (source)

Je nach gewünschtem Zieltyp eines verschränkten Quantensystems ist die Quantenquelle auszuwählen. Das Verfahren ist sowohl für Fermionen als auch für Bosonen geeignet. Im Folgenden wird das Verfahren mittels Photonen (Bosonen) beschrieben.

Typischer Weise dient ein Laser als Quelle des Pump-Strahls, beispielsweise linear polarisiert. Abhängig von der Zielimplementierung können Intensität und Wellenlänge frei gewählt werden. Ebenfalls abhängig vom Einsatzfeld kann zwischen gepulsten und kontinuierlichen Lasern gewählt werden.

### BB02) Verschränkung (entanglement of quanta)

Mittels einer geeigneten Methode, beispielsweise SPDC (spontaneous parametric down conversion), werden Paare von verschränkten Photonen erzeugt.

Um volle Kontrolle über den Status der Weg-Information zu haben, bietet sich die Eigenschaft Polarisation besonders an. Beispielsweise kann mittels Verwendung eines nichtlinearen Mediums, welches in zwei Schichten, deren optische Achsen um 90° zueinander gedreht sind, angeordnet ist, eine Superposition der Polarisation von

[Math. 1]

$$\frac{1}{\sqrt{2}}(HH + VV)$$

hergestellt werden (Kwiat 1999[10]). Eine solche Superposition eignet sich für das gezielte Aufbringen von Phasen und wird daher als "Träger-Superposition" eingesetzt. Die Optimierung der Phasenbeziehung innerhalb der Superposition kann beispielsweise durch wellenlängengeeignete, doppelbrechende Kompensations-Verzögerungsplatten (HWP) erfolgen. Auf diese Art der Optimierung wird im Folgenden nicht weiter eingegangen. (Pysher[11])

### BB03) Aufbau von Distanz und/oder von Ungleichheit der optischen Pfadlänge (propagating quanta)

Um maximalen Nutzen aus dem nichtlokalen Effekt zu ziehen, sind große Distanzen zwischen den Subsystemen und der Einsatz von Photonen, beispielsweise zur Informationsübertragung, besonders sinnvoll. Je nach Anwendungsziel ist die Ungleichheit der beiden Längen des optischen Weges nutzbar. Um den Effekt einer "delayed choice" ausnützen zu können, ist ein Längenverhältnis

VD im Idler-Subsystem >> VD im Signal-Subsystem erforderlich.

In miniaturisierten Anwendungen zur Informationsverarbeitung steht die Ungleichheit der Längen bei gleichzeitig kleinen Distanzen im Vordergrund.

Die Art der Übertragung hat keinen prinzipiellen Einfluss, solange der Erhalt von definierten Eigenschaften gesichert ist. Wird beispielsweise Polarisation als Träger-Superposition verwendet, dann muss die Übertragungsmethode der Photonen die Kontrollierbarkeit des Polarisationszustandes gewährleisten (beispielsweise Polarisations-Stabilisatoren).

### BB04) Etablierung einer räumlichen Superposition (spatial superposition)

Um Interferenz messen zu können, ist eine räumliche Superposition erforderlich. Eine besonders geeignete Anordnung zur Etablierung einer räumlichen Superposition ist ein Mach-Zehnder-Interferometer (MZI). Um die volle Kontrolle über den Status "Wissen über welchen Weg" und gleichzeitig auch volle Kontrolle über den Phasenlösungsraum der Pfadintegrale zu haben, empfiehlt sich die Verwendung eines polarisierenden Strahlteilers (PBS, polarized beam splitter) als ersten Strahlteiler des Interferometers.

Die durch das MZI etablierte räumliche Superposition und deren lokaler Phasenlösungsraum werden über die Verschränkung auch von den Phasen der Idler-Photonen mitbestimmt.

Da für die Aufrechterhaltung der räumlichen Superposition die Ununterscheidbarkeit der von den Signal-Photonen genommenen Pfade durch das Interferometer erforderlich ist, muss die Polarisation in einem Arm des Interferometers geändert werden, beispielsweise durch eine Verzögerungsplatte HWP$_{45°}$. Dadurch kommt dem zweiten Strahlteiler (BS, beam splitter) die Funktion eines "quantum eraser" zu. Durch die Überlagerung im zweiten Strahlteiler wird die Nachvollziehbarkeit des Weges durch das Interferometer verhindert und Interferenz wird messbar. Die Operation "quantum eraser" bezieht sich vorerst nur auf das Signal-Subsystem und ist aber auch von der Aufrechterhaltung der Ununterscheidbarkeit im Idler-Subsystem abhängig.

Um eine höhere Signifikanz der Detektionen im Detektor Det-1 zu erreichen, ist der Phasenlösungsraum des Interferometers über geeignete Maßnahmen (z.B. Phasenschieber in Form des beweglichen Spiegels PS$_\varphi$ in Fig. 1 bzw. des beweglichen Spiegels mM$_{\varphi_{MZI}}$ in Fig. 2) so zu wählen, dass das Maximum der Intensität im Ausgangsmode Richtung Detektor Det-2 zu finden ist. Somit werden nur jene Photonen in Richtung Detektor Det-1 gelenkt, die eine zusätzliche Phasendifferenz (optimal $\pi$)

im Idler-Subsystem aufgeprägt bekommen.

## BB05) Aufprägen einer Phasendifferenz auf die Träger-Superposition (manipulate the phase state)

Um Einfluss auf den verschränkten Phasenlösungsraum ausüben zu können, ist die gezielte Manipulation der Phasen innerhalb der Träger-Superposition erforderlich.

Das kann beispielsweise durch einen Pancharatnam-Berry-Phasen-Schieber (Kwiat1991[12]), bestehend aus zwei quater wave plates QWP, zwischen denen ein half wave plate HWP angeordnet ist, oder einen pMZA (polarisierendes Mach-Zehnder-Aligner) mit integrierter Phasendifferenzsteuerung realisiert werden. Mit einem Pancharatnam-Berry-Phasen-Schieber kann aus der Träger-Superposition

$$\frac{1}{\sqrt{2}}\left(H_s H_i + V_s V_i\right)$$

die Phasenbeziehung

$$\frac{1}{\sqrt{2}}\left(H_s H_i + e^{i\varphi} V_s V_i\right)$$

erzeugt werden, wobei sich $\varphi$ aus dem zusätzlichen Rotationswinkel $\beta$ des Pancharatnam-Berry-Phase-Schiebers in der Beziehung $\varphi = 4\beta$ ergibt (Galvez[7]). Durch Änderung der Phasenbeziehung innerhalb der Träger-Superposition wird gleichzeitig auch der gesamte Phasenlösungsraum der verschränkten Partner geändert und somit die statistische Wahrscheinlichkeit der Intensitäten der Ausgangsmoden Richtung Detektoren Det-1 und Det-2 beeinflusst.

## BB06a) "quantum eraser" im Signal-Subsystem

Zur Gewährleistung der Ununterscheidbarkeit der Pfade innerhalb der räumlichen Superposition ist eine Operation "quantum eraser" erforderlich. Diese Operation kann beispielsweise durch den zweiten Strahlteiler im MZI erfüllt werden. Die Ununterscheidbarkeit der Pfade ist aber auch vom Idler-Subsystem abhängig.

## BB06b) "quantum eraser" im Idler-Subsystem

Im Idler-Subsystem ist nach dem Aufprägen der Phasendifferenz innerhalb der Träger-Superposition eine Operation "quantum eraser" QE erforderlich (HWP-22,5, Polarisator, Adsorption). Diese kann beispielsweise durch einen Polarisator realisiert werden. (Walborn[13])

Das Verfahren erlaubt auch die Beeinflussung der Interferenz im MZI des Signal-Subsystems durch Messung der Polarisation des Idler-Photons und des dadurch festgelegten Pfades des verschränkten Signal-Photons im MZI durch Drehung des Polarisators in eine geeignete Polarisationsebene, die die Pfadinformation offenbart. Dies unterbindet die Interferenz. Die Intensitäten sind bei 50:50 Strahlteilern dann in beiden Ausgangsmoden des MZI im Signal-Subsystem gleich.

## BB07) Messung der Interferenz (measurement of the existence of interference)

Durch Messungen der Detektoren Det-1 und Det-2 kann lokal die Existenz von Interferenz und bei implementierter Korrelation zwischen der aufgeprägten Phasendifferenz im Idler-Subsystem und den Intensitätsmaxima der Ausgangsmoden des MZI im Signal-Subsystem auch der Zustand des Manipulationsmechanismus des Phasenlösungsraumes im Idler-Subsystem auf statistischer Ebene festgestellt werden.

## Beschreibung zweier bevorzugter Ausführungsformen

Die Nicht-Lokalität von EPR-Effekten bei verschränkten Quanten ist gesicherter Stand der Wissenschaft und Technik. Die Darstellung des gemeinsamen Phasenzustandes eines verschränkten Paares Photonen mit nur einem Partner ist bekannt (Ma [6]; Lemos[2]). Die vorliegende Erfindung erlaubt bei verschränkten Photonen die lokale Messung einer nicht-lokalen Beeinflussung. Die Verwendung einer Koinzidenzmessung ist nicht erforderlich.

Die Operatoren "quantum eraser" als jeweilige Abschlussoperation des jeweiligen Partners des verschränkten Photonenpaares in den beiden Subsystemen zur Aufrechterhaltung der räumlichen Superposition etablieren eine temporale Superposition der zeitlichen Abfolge:

$$(QE_s \text{ zeitlich vor } QE_i) + (QE_s \text{ zeitlich nach } QE_i)$$

und schaffen damit die Basis für einen EPR-Effekt und somit auch für einen "delayed choice"-Effekt.

Im Folgenden wird nicht nur über vierstellige Bezugszeichen, sondern zur Verbesserung der Lesbarkeit auch über Kurzbezeichnungen Bezug auf das Implementierungsbeispiel in Fig. 2 genommen. Die zweite Ziffer der Bezugszeichen kodiert die Stufe des Modells (BuildingBlock) von Fig. 1. Die letzten beiden Ziffern sind eindeutige Zahlen innerhalb der entsprechenden Stufe.

Alle optischen und elektronischen Maßnahmen zur Erhöhung der signifikanten Photonenrate im Detektor wie optische Linsen, Filter, Beschichtungen von optischen Elementen, wellenlängenabhängige Optimierung von optischen Elementen, Kompensatoren zum Ausgleichen der Pfadlängen im MZI und dem pMZA und dergleichen sind nicht explizit dargestellt.

Das Verfahren benötigt eine Quelle verschränkter Photonen.

Eine typische Quelle für Photonen ist ein kollinearer, monochromatischer Laser, wie in Fig. 2 durch S 1101 dargestellt. Die Wellenlänge kann 405 nm betragen. Die Qualität der Polarisation kann durch einen polarisierenden Strahlteiler, der die Photonen mit ungewünschter Polarisierung aus dem Pump-Strahl auslenkt (laser diode polarization ratio), verbessert werden. Der Pump-Strahl hat somit nur eine Polarisation, beispielsweise horizontal.

Um die gewünschte Träger-Superposition zu generieren, wird der Pump-Strahl mittels eines $HWP_{22,5}$ 1121 auf eine Superposition der Polarisation

$$\frac{1}{\sqrt{2}}\left(H_p + V_p\right)$$

(der Index p steht für "Pumpstrahl") gedreht.

Zur Erzeugung verschränkter Photonen dient ein Paar BBO-Kristalle NL 1201, die um 90° zueinander gedreht sind. Die Orientierung der zusammengesetzten BBO-Kristalle ist so gewählt, dass durch den SPDC-Prozess ein 3°-Kegel verschränkter Photonen (signal-Photonen und idler-Photonen) mit identer Wellenlänge von 810 nm entsteht. Bei einem SPDC-Prozess Typ I mit den beschriebenen zusammengesetzten Kristallen und dem beschriebenen Pump-Strahl entstehen verschränkte Photonenpaare in der Träger-Superposition

$$\frac{1}{\sqrt{2}}\left(H_s H_i + V_s V_i\right)$$

(Kwiat 1999[10], die Indices s und i stehen für signal und idler). Der Teil des Pump-Strahles, der nicht konvertiert wurde, wird durch einen Beam-Dump nach den BBO-Kristallen NL 1201 absorbiert (nicht dargestellt).

Die verschränkten Photonen werden in unterschiedliche Sub-Systeme, die Signal-Subsystem-Mode ISPK$_s$> 1211 und die Idler-Subsystem-Mode ISPK$_i$> 1212, gelenkt. Zur besseren Kontrollierbarkeit der Photonen und der zu durchlaufenden Pfade wird eine Quelle linear polarisierter Photonen in einem der Bell-Zustände, hier

$$\Phi^-\left(\frac{1}{\sqrt{2}}\left(H_s H_i + V_s V_i\right)\right)$$

, gewählt.

Die Photonen können in freier Übertragung oder in Lichtleitern (fiber) übertragen werden. Bei Verwendung von Lichtleitern sind Polarisations-Stabilisatoren erforderlich, wenn die Träger-Superposition für die Phasenmanipulation die Polarisation ist.

### Signal-Subsystem

Die beliebige und daher variable Länge des optischen Pfades von der Quelle der verschränkten Photonen NL 1201 zum Strahlteiler wird durch den Kreis mit der Beschriftung VD 1301 (VD=variable distance) zum Ausdruck gebracht.

Für das Verfahren ist zumindest eine räumliche Superposition der Pfade als Teil des Gesamtsystems erforderlich. Diese räumliche Superposition wird durch ein Interferometer, in diesem Ausführungsbeispiel durch ein Mach-Zehnder-Interferometer MZI 1400, hergestellt. Da die lokale Messung im Signal-Subsystem vorgesehen ist, wird das Interferometer im Signal-Subsystem angeordnet. Da verschränkte Photonen den Phasenlösungsraum der Pfadintegrale gemeinsam definieren, reicht die Existenz einer räumlichen Superposition in einem der Subsysteme.

Durch Verwendung eines polarisierenden Strahlteilers PBS$_s$ 1401 im Interferometer im Signal-Subsystem im Implementierungsbeispiel ist die Pfadvorgabe für die Superposition der Polarisierung jeweils eindeutig: es entstehen die beiden Moden der räumlichen Superposition a 1411 und b 1412. Die Mode b wird durch einen feststehenden Spiegel M 1431, die Mode a durch einen verstellbaren Spiegel mM$\varphi_{MZI}$ 1432 umgelenkt, sodass beide auf einen Strahlteiler BS 1402 treffen. Dieser ist ein 50:50 Strahlteiler und überlagert die beiden Moden der räumlichen Superposition a 1411 und b 1412. Da im Pfad der Mode b 1412 ein $HWP_{45°}$ 1421 (HWP=half waver plate) so angeordnet ist, dass die Polarisation der Photonen in diesem Arm des Interferometers auf die andere Polarisation geändert wird, sind die überlagerten Photonen im Durchgang durch den Strahlteiler ununterscheidbar und können daher interferieren.

Der Strahlteiler BS 1402 erfüllt am Ende der räumlichen Superposition die Aufgabe der Operation "quantum eraser". Danach ist im Signal-Subsystem sichergestellt, dass der Pfadverlauf aus den Informationen des Signal-Subsystems nicht mehr nachvollziehbar ist.

Entsprechend der gemeinsamen Phase und der daraus errechenbaren Wahrscheinlichkeitsverteilung wird das Signal-Photon entweder Richtung Detektor Det-2 1702 oder Detektor Det-1 1701 gelenkt.

Zur Optimierung des MZI ist der Spiegel mM$\varphi_{MZI}$ 1432 linear beweglich und als Phasenschieber angeordnet. Diese Art der Steuerung der Phase innerhalb eines MZI findet sich beispielsweise in Heuer[15]. Die Art des Aufbaues eines MZI findet sich beispielsweise auch in Cramer[16].

### Idler-Subsystem

Die optische Strecke zwischen der Quelle der verschränkten Photonen und einem Pancharatnam-Berry-Phase-Shifter 1530 kann beliebig und daher variabel lang umgesetzt werden. Dies wird durch den Kreis mit der Beschriftung VD 1302 zum Ausdruck gebracht. Zur Umsetzung einer "delayed choice" Anordnung ist das Längenverhältnis

## VD 1302 >> VD 1301

notwendig.

Das Idler-Subsystem implementiert eine Vorrichtung zur Einbringung einer Phasendifferenz in die "Träger-Superposition", welche hier die Polarisation ist. Die Variante gemäß Fig. 2 ist durch einen Pancharatnam-Berry-Phase-Shifter 1530 wie folgt realisiert:

Der Pancharatnam-Berry-Phase-Shifter 1530 besteht aus zwei quater wave plates QWP 1520, 1522, zwischen denen ein half wave plate HWP 1521 angeordnet ist. Auf diese Weise kann durch Rotation des HWP 1521, welches Teil des Pancharatnam-Berry-Phase-Shifters 1530 ist, die Phase der Träger-Superposition um einen Wert $\beta_m$ verändert werden, siehe Galvez[7].

Der Polarisator POL$_{45°}$ 1621 hat die Aufgabe, die Polarisation im Idler-Subsystem ununterscheidbar zu machen und dadurch ebenfalls die Weg-Information im Idler-Subsystem zu "löschen". Dadurch wird explizit die Operation "quantum eraser" implementiert. Gemeinsam mit der Operation "quantum eraser" im Signal-Subsystem wird dadurch die räumliche Superposition aktiv gehalten, was die Messung von Interferenz im Signal-Subsystem erlaubt.

Die Messung in Detektor Det-3 1703 ist für die Signal-Erkennung im Signal-Subsystem nicht erforderlich (statistisches Signal/Protokoll).

Die nichtlokale Beeinflussung des Phasenlösungsraumes des MZI durch das Aufprägen einer zusätzlichen Phasendifferenz im Idler-Subsystem kann an den beiden Ausgangsmoden des 50:50 Strahlteilers BS 1402 durch die Detektoren Det-1 und Det-2 als statistisches Protokoll gemessen werden. Diese Messung der "second order interference" ist bei richtig gewählten Phasen $\varphi_{MZI}$ und $\beta_m$ bereits mit einem Detektor messbar.

Die Ausführungsform gemäß Fig. 3 unterscheidet sich unter anderem darin, dass statt des Pancharatnam-Berry-Phase-Shifters 1530 ein pMZA 1500 vorgesehen ist: Zwei polarisierende Strahlteiler PBS$_{i1}$ 1501 und PBS$_{i2}$ 1502 erfüllen die Aufgabe einer Überlagerung zweier Moden, ohne jedoch Interferenz messbar zu machen ("alignment" in Zou[1]), es entsteht ein pMZA 1500 (polarisierender Mach-Zehnder-Aligner).

Vor dem pMZA 1500 befindet sich ein HWP 1525, das die Polarisation in die Ebene +45° (oder -45°) dreht. Statt eines HWP kann natürlich auch ein EOM (elektro-optischer Modulator) verwendet werden, um die Polarisationsebene entsprechend zu drehen. Durch das HWP 1525 entsteht im nachfolgenden pMZA 1500 eine Superposition der Pfade.

Horizontal und vertikal polarisierte Photonen werden in jeweils einen Arm des pMZA 1500 durch den polarisierenden Strahlteiler PBS$_{i1}$ 1501 gelenkt. In einem Arm, mit Mode d 1512 bezeichnet, befindet sich ein fest stehender Spiegel M 1531, im anderen Arm, mit Mode c 1511 bezeichnet, befindet sich ein verstellbarer Spiegel mM$\beta_m$ 1532. Durch diese beiden Spiegel werden die Photonen in den beiden Armen auf den polarisierenden Strahlteiler PBS$_{i2}$ 1502 geworfen, wo sie wieder vereinigt werden.

Der linear bewegliche Spiegel mM$\beta_m$ 1532 realisiert einen Phasenschieber mit der Phase $\beta_m$, sodass diesen Photonen eine zusätzliche Phase $\beta_m$ (in einer idealisierten Realisation gilt $\beta_m = \pi$) aufgeprägt werden kann. Diese Phase ist durch das pMZA 1500 genau einer Polarisierung zugeordnet.

Damit die Moden c 1511 und d 1512 in dem polarisierenden Strahlteiler PBS$_{i2}$ 1502 ohne Interferenz überlagert werden können, wird die jeweilige Polarisation durch das HWP 1521 (kann auch durch zwei HWP realisiert werden) getauscht. Dazu ist in beiden Moden ein HWP$_{45°}$ 1521 notwendig, um im Strahlteiler PBS$_{i2}$ 1502 die gewünschte Transmission/Reflektion zu gewährleisten (Jacqucs[14]).

Diese Vorrichtung ähnelt also einem Interferometer, da aber keine Interferenz messbar gemacht werden soll, ist es kein Interferometer im engeren Sinne. Diese Anordnung wird daher in der vorliegenden Beschreibung als polarisierender Mach-Zehnder-Aligner pMZA bezeichnet.

Durch den Phasenschieber kann eine zusätzliche Phase, welche dann nur für diesen Teil der Superposition der Polarisation wirkt, eingebracht werden. Aus

$$\left( \frac{1}{\sqrt{2}} \left( H_s H_i + V_s V_i \right) \right)$$

wird dann

$$\left( \frac{1}{\sqrt{2}} \left( H_s H_i + e^{i\beta} V_s V_i \right) \right)$$

oder

$$\left( \frac{1}{\sqrt{2}} \left( e^{i\beta} H_s H_i + V_s V_i \right) \right)$$

, abhängig von der gewählten Polarisationsebene von PBS$_{i1}$ 1501.

Ohne Beschränkung der Allgemeinheit kann man die Position des Spiegels mM$\beta_m$ 1532 so wählen, dass bei Interferenz im Signal-Subsystem das Maximum der Intensität bei Detektor Det-2 auftritt.

Ein weiterer Unterschied der Ausführungsform gemäß Fig. 3 besteht darin, dass beim MZI 1400' statt des polarisierenden Strahlteilers PBS$_s$ 1401 ein normaler Strahlteiler BS$_{s1}$ 1401' vorgesehen ist. (Aus Gründen der Systematik ist der Strahlteiler BS 1402 aus Fig. 2 mit BS$_{s2}$ 1402 in Fig. 3 bezeichnet.) Dadurch kann das HWP 1421 entfallen. Eine weitere Vereinfachung besteht in der Erzeugung der verschränkten Teilchen: hier fallen die Photonen des Lasers S 1101 direkt auf einen nichtlinearen Kristall NL 1201.

Die Detektion von Interferenzen kann nur durch statistische Protokolle erreicht werden, da innerhalb der Interferometer eine Detektion eines einzelnen Quantums, z.B. im Detektor Det-1 1701, keine Aussagekraft hat (z. B. Dunkelzählraten der Detektoren). Die lokale Messung der Übereinstimmung von Detektionen durch Detektoren Det-1 1701 mit Det-2 1702 kann verwendet werden, um die Qualität der Messung zu verbessern.

Neben der Optimierung der Effizienz jeder Stufe ist die massive parallele Nutzung solcher Kommunikationskanäle eine gültige Methode zur Verbesserung der Baudraten um Größenordnungen von 2 bis 4 oder sogar mehr und ermöglicht eine zeiteffiziente Fehlerkorrektur.

Eine zusätzliche Verbesserung kann erreicht werden, indem solche Kommunikationskanäle auch in die entgegengesetzte Richtung implementiert werden, um die übertragenen Informationen zu bestätigen. In diesem Fall muss die relativistische Kausalität "kausale Kohärenz" respektiert werden.

[1] X. Y. Zou, L. J. Wang, and L. Mandel, "Induced coherence and indistinguishability in optical interference", Phys. Rev. Lett., vol. 67, no. 3, pp. 318-321, Jul. 1991, doi: 10.1103/PhysRevLett.67.318.

[2] G. B. Lemos, V. Borish, G. D. Cole, S. Ramelow, R. Lapkiewicz, and A. Zeilinger, "Quantum imaging with undetected photons", Nature, vol. 512, p. 409, Aug. 2014.

[3] A. Einstein, B. Podolsky, and N. Rosen, "Can Quantum-Mechanical Description of Physical Reality Be Considered Complete?", Phys. Rev., vol. 47, no. 10, pp. 777-780, May 1935, doi: 10.1103/PhysRev.47.777.

[4] "The Feynman Lectures on Physics Vol. III Ch. 1: Quantum Behavior", https://www.feynmanlectures.caltech.edu/III 01.html#Ch1-S7 (accessed Sep. 19, 2020).

[5] R. P. F. PH.D, R. P. Feynman, A. R. Hibbs, and A. R. Hibbs, "Quantum Mechanics and Path Integrals", McGraw-Hill, 1965.

[6] X. Ma et al., "Quantum erasure with causally disconnected choice", Proc Natl Acad Sci USA, vol. 110, no. 4, pp. 1221-1226, Jan. 2013, doi: 10.1073/pnas.1213201110.

[7] E. J. Galvez, M. Malik, and B. C. Melius, "Phase shifting of an interferometer using nonlocal quantum-state correlations", Phys. Rev. A, vol. 75, no. 2, p. 020302, Feb. 2007, doi: 10.1103/PhysRevA.75.020302.

[8] G. Jaeger, M. A. Horne, and A. Shimony, "Complementarity of one-particle and two-particle interference", Phys. Rev. A, vol. 48, no. 2, pp. 1023-1027, Aug. 1993, doi: 10.1103/PhysRevA.48.1023.

[9] X. Ma, J. Kofler, and A. Zeilinger, "Delayed-choice gedanken experiments and their realizations", Rev. Mod. Phys., vol. 88, no. 1, p. 015005, Mar. 2016, doi: 10.1103/RevModPhys.88.015005.

[10] P. G. Kwiat, E. Waks, A. G. White, I. Appelbaum, and P. H. Eberhard, "Ultra-bright source of polarization-entangled photons," Phys. Rev. A, vol. 60, no. 2, pp. R773-R776, Aug. 1999, doi: 10.1103/PhysRevA.60.R773.

[11] M. J. Pysher, E. J. Galvez, K. Misra, K. R. Wilson, B. C. Melius, and M. Malik, "Nonlocal labeling of paths in a single-photon interferometer," Phys. Rev. A, vol. 72, no. 5, p. 052327, Nov. 2005, doi: 10.1103/PhysRevA.72.052327.

[12] P. Kwiat, "Observation of a nonclassical Berry's phase for the photon", ResearchGate https://www.researchgate.net/publication/13245896 Observation of a no nclassical Berry's phase for the photon , March 1991 (accessed Sep. 06, 2020).

[13] S. P. Walborn, M. O. T. Cunha, S. Padua, and C. H. Monken, "A double-slit quantum eraser," Phys. Rev. A, vol. 65, no. 3, p. 033818, Feb. 2002, doi: 10.1103/PhysRevA.65.033818.

[14] V. Jacques et al., "Experimental realization of Wheeler's delayed-choice Gedanken Experiment" in 2007 European Conference on Lasers and Electro-Optics and the International Quantum Electronics Conference, Jun. 2007, pp. 1-1, doi: 10.1109/CLEOE-IQEC.2007.4386903.

[15] A. Heuer, R. Menzel, and P. W. Milonni, "Induced Coherence, Vacuum Fields, and Complementarity in Biphoton Generation", Phys. Rev. Lett., vol. 114, no. 5, p. 053601, Feb. 2015, doi: 10.1103/PhysRevLett.114.053601.

[16] J. G. Cramer and N. Herbert, "An Inquiry into the Possibility of Nonlocal Quantum Communication," arXiv:1409.5098 [quant-ph], Sep. 2014, Accessed: Feb. 19, 2019. [Online Available: http://arxiv.org/abs/1409.5098 ].

**Patentansprüche**

1. Verfahren zur Informationsübertragung mittels verschränkter Quanten, die zur Interferenz befähigt sind, nämlich mittels Idler-Quanten, die mit Signal-Quanten verschränkt sind, **dadurch gekennzeichnet, dass** man eine Anordnung verwendet, die

   a) mindestens eine räumliche Superposition innerhalb des Systemraumes "Pfade" vorsieht;
   b) eine temporale Superposition von Quantenoperationen (quantum-eraser) vorsieht, welche die eindeutige Zuordnung der Information über die Pfade der räumlichen Superposition innerhalb des relativistischen Kausalitätsraumes aufhebt;
   c) eine Superposition (Träger-Superposition) eines messbaren und kontrollierbaren Attributes der verschränkten Quanten, z.B. von deren Polarisation, vorsieht;

d) eine Manipulationsmethode dieses Attributes mit dem Phasenlösungsraum der Pfadintegrale des Systems verschränkter Quanten vorsieht, und zwar im idler-Subsystem;

e) im signal-Subsystem zwei exit-modes zur Messung der Interferenz und im idler-Subsystem nur die räumliche Überlagerung von exit-modes ohne Interferenzmessung vorsieht,

**und dass** man mit der Manipulationsmethode im Idler-Subsystem das Attribut verändert und die sich ändernde Interferenz im Signal-Subsystem misst.

2. Anordnung zur Durchführung des Verfahrens nach Anspruch 1, **dadurch gekennzeichnet, dass** es enthält:

a) eine Photonenquelle, insbesondere einen Laser (1101);

b) eine Quelle verschränkter Photonen, insbesondere einen nichtlinearen Kristall (1201), der aus den Photonen des Lasers (1101) verschränkte Photonen, nämlich Signal-Photonen und Idler-Photonen, generiert;

c) ein Strahlleitsystem, das die Signal-Photonen in ein Signal-Subsystem leitet und die Idler-Photonen in ein Idler-Subsystem;

d) im Signal-Subsystem:

i) ein Interferometer (1400);
ii) zumindest einen Detektor (1701, 1702) am Ausgang des Interferometers (1400);

e) im Idler-Subsystem:

iii) einen Mach-Zehnder-Aligner (1500) mit zwei polarisierenden Strahlteilern (1501, 1502), wobei in beiden Armen ein half wave plate (1521) angeordnet ist und ein Spiegel (1532) verschiebbar ist; oder einen Pancharatnam-Berry-Phase-Shifter; und
iv) nach dem Mach-Zehnder-Aligner (1500) bzw. dem Pancharatnam-Berry-Phase-Shifter einen Polarisator (1621) zur Löschung der Weg-Information im Idler-Subsystem.

3. Anordnung nach Anspruch 2, **dadurch gekennzeichnet, dass** das in i) erwähnte Interferometer (1400) ein Mach-Zehnder-Interferometer ist.

4. Anordnung nach Anspruch 3, **dadurch gekennzeichnet, dass** der erste Strahlteiler (1401) des Mach-Zehnder-Interferometers (1400) ein polarisierender Strahlteiler ist und dass in einem der beiden Interferometerarme ein die Polarisationsebene um 90° drehendes optisches Element, insbesondere ein half wave plate (1421), angeordnet ist.

**Claims**

1. Method for transmitting information by means of entangled quanta capable of interference, namely by means of idler quanta entangled with signal quanta, **characterized in that** an arrangement is used which

a) provides for at least one spatial superposition within the system space "paths";
b) provides for a temporal superposition of quantum operations (quantum eraser), which eliminates the unambiguous assignment of information about the paths of spatial superposition within the relativistic causality space;
c) provides for a superposition (carrier superposition) of a measurable and controllable attribute of the entangled quanta, e.g. B. of their polarization;
d) provides a method for manipulating this attribute with the phase solution space of the path integrals of the system of entangled quanta, namely in the idler subsystem;
e) in the signal subsystem, two exit modes are provided for measuring the interference, and in the idler subsystem only the spatial superposition of exit modes without interference measurement is provided for,

**and in** changing the attribute in the idler subsystem using the manipulation method and measuring the changing interference in the signal subsystem.

2. Arrangement for carrying out the method according to claim 1, **characterized in that** it contains:

a) a photon source, in particular a laser (1101);
b) a source of entangled photons, in particular a non-linear crystal (1201), which generates entangled photons, namely signal photons and idler photons, from the photons of the laser (1101);
c) a beam guidance system that guides the signal photons into a signal subsystem and the idler photons into an idler subsystem;
d) in the signal subsystem:

i) an interferometer (1400);
ii) at least one detector (1701, 1702) at the output of the interferometer (1400);

e) in the idler subsystem:

iii) a Mach-Zehnder aligner (1500) with two polarizing beam splitters (1501, 1502), wherein a half-wave plate (1521) is arranged in both arms and a mirror (1532) is displaceable; or a Pancharatnam-Berry phase shifter; and

iv) after the Mach-Zehnder aligner (1500) or the Pancharatnam-Berry phase shifter, a polarizer (1621) to delete the path information in the idler subsystem.

3. Arrangement according to claim 2, **characterized in that** the interferometer (1400) mentioned in i) is a Mach-Zehnder interferometer.

4. Arrangement according to claim 3, **characterized in that** the first beam splitter (1401) of the Mach-Zehnder interferometer (1400) is a polarizing beam splitter and that an optical element rotating the polarization plane by 90°, in particular a half-wave plate (1421), is arranged in one of the two interferometer arms.

**Revendications**

1. Procédé de transmission d'informations au moyen de quanta intriqués susceptibles d'interférence, à savoir au moyen de quanta idler intriqués avec des quantas de signal, **caractérisé en ce qu'**on utilise un agencement qui

a) prévoit au moins une superposition spatiale dans l'espace système « chemins »;
b) prévoit une superposition temporelle d'opérations quantiques (effaceur quantique), qui élimine l'attribution univoque d'informations sur les chemins de superposition spatiale dans l'espace de causalité relativiste;
c) prévoit une superposition (superposition de porteurs) d'un attribut mesurable et contrôlable des quanta intriqués, par exemple de leur polarisation;
d) fournit une méthode pour manipuler cet attribut avec l'espace de solution de phase des intégrales de chemin du système de quanta intriqués, à savoir dans le sous-système idler ;
e) prévoit dans le sous-système de signal, deux modes de sortie pour mesurer l'interférence et dans le sous-système idler uniquement la superposition spatiale des modes de sortie sans mesure d'interférence,

**et qu'**on modifie l'attribut dans le sous-système idler faisant appel à la méthode de manipulation et qu'on mesure l'interférence changeante dans le sous-système de signal.

2. Dispositif pour la mise en œuvre du procédé selon la revendication 1, **caractérisé en ce qu'**il contient :

a) une source de photons, notamment un laser (1101) ;

b) une source de photons intriqués, notamment un cristal non linéaire (1201), qui génère des photons intriqués, à savoir des photons de signal et des photons idler, à partir des photons du laser (1101) ;
c) un système de guidage de faisceau qui guide les photons de signal dans un sous-système de signal et les photons idler dans un sous-système idler;
d) dans le sous-système de signal:

i) un interféromètre (1400);
ii) au moins un détecteur (1701, 1702) à la sortie de l'interféromètre (1400);

e) dans le sous-système idler :

iii) un aligneur Mach-Zehnder (1500) avec deux séparateurs de faisceau polarisants (1501, 1502), dans lequel une lame demi-onde (1521) est disposée dans les deux bras et un miroir (1532) est déplaçable; ou un déphaseur Pancharatnam-Berry; et
iv) après l'aligneur Mach-Zehnder (1500) ou le déphaseur Pancharatnam-Berry, un polariseur (1621) pour effacer les informations de chemin dans le sous-système idler.

3. Dispositif selon la revendication 2, **caractérisé en ce que** l'interféromètre (1400) mentionné en i) est un interféromètre de Mach-Zehnder.

4. Dispositif selon la revendication 3, **caractérisé en ce que** le premier séparateur de faisceau (1401) de l'interféromètre de Mach-Zehnder (1400) est un séparateur de faisceau polarisant et qu'un élément optique faisant tourner le plan de polarisation de 90°, notamment une lame demi-onde (1421), est disposé dans l'un des deux bras de l'interféromètre.

[Fig. 1]

Quantenquelle

Verschränkung

Aufbau von Distanz

räumliche Superpostition, z.B. MZI inkl. Phasen-schieber φ

Phasenmanipulation, z.B. Pancharatnam-Berry-Phasenschieber

quantum eraser QE, z.B. Polarisator; QE=BS in BB04

Messung der Interferenz

PS φ

HWP

BS

QE

Det-2   Det-1

PBS

QWP   HWP   QWP   QE

Det-3

BB01

BB02

BB03

BB04

BB05

BB06

BB07

[Fig. 2]

[Fig. 3]

**EP 4 360 010 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **LU GAO et al.** *Nonlocal Quantum Erasure of Phase Objects*
- **SEONGJIN HONG et al.** *Experimental implementation of arbitrary entangled operations*
- **X. Y. ZOU** ; **L. J. WANG** ; **L. MANDEL**. Induced coherence and indistinguishability in optical interference. *Phys. Rev. Lett.*, July 1991, vol. 67 (3), 318-321
- **G. B. LEMOS** ; **V. BORISH** ; **G. D. COLE** ; **S. RAMELOW** ; **R. LAPKIEWICZ** ; **A. ZEILINGER**. Quantum imaging with undetected photons. *Nature*, August 2014, vol. 512, 409
- **A. EINSTEIN** ; **B. PODOLSKY** ; **N. ROSEN**. Can Quantum-Mechanical Description of Physical Reality Be Considered Complete?. *Phys. Rev.*, May 1935, vol. 47 (10), 777-780
- Quantum Behavior. The Feynman Lectures on Physics. 19 September 2020
- **R. P. F. PH.D** ; **R. P. FEYNMAN** ; **A. R. HIBBS** ; **A. R. HIBBS**. Quantum Mechanics and Path Integrals. McGraw-Hill, 1965
- **X. MA et al.** Quantum erasure with causally disconnected choice. *Proc Natl Acad Sci USA*, January 2013, vol. 110 (4), 1221-1226
- **E. J. GALVEZ** ; **M. MALIK** ; **B. C. MELIUS**. Phase shifting of an interferometer using nonlocal quantum-state correlations. *Phys. Rev. A*, February 2007, vol. 75 (2), 020302
- **G. JAEGER** ; **M. A. HORNE** ; **A. SHIMONY**. Complementarity of one-particle and two-particle interference. *Phys. Rev. A*, August 1993, vol. 48 (2), 1023-1027
- **X. MA** ; **J. KOFLER** ; **A. ZEILINGER**. Delayed-choice gedanken experiments and their realizations. *Rev. Mod. Phys.*, March 2016, vol. 88 (1), 015005
- **P. G. KWIAT** ; **E. WAKS** ; **A. G. WHITE** ; **I. APPELBAUM** ; **P. H. EBERHARD**. Ultra-bright source of polarization-entangled photons. *Phys. Rev. A*, August 1999, vol. 60 (2), R773-R776
- **M. J. PYSHER** ; **E. J. GALVEZ** ; **K. MISRA** ; **K. R. WILSON** ; **B. C. MELIUS** ; **M. MALIK**. Nonlocal labeling of paths in a single-photon interferometer. *Phys. Rev. A*, November 2005, vol. 72 (5), 052327
- **P. KWIAT**. Observation of a nonclassical Berry's phase for the photon. *ResearchGate*, March 1991, https://www.researchgate.net/publication/13245896
- **S. P. WALBORN** ; **M. O. T. CUNHA** ; **S. PADUA** ; **C. H. MONKEN**. A double-slit quantum eraser. *Phys. Rev. A*, February 2002, vol. 65 (3), 033818
- **V. JACQUES et al.** Experimental realization of Wheeler's delayed-choice Gedanken Experiment. *2007 European Conference on Lasers and Electro-Optics and the International Quantum Electronics Conference*, June 2007, 1-1
- **A. HEUER** ; **R. MENZEL** ; **P. W. MILONNI**. Induced Coherence, Vacuum Fields, and Complementarity in Biphoton Generation. *Phys. Rev. Lett.*, February 2015, vol. 114 (5), 053601
- **J. G. CRAMER** ; **N. HERBERT**. An Inquiry into the Possibility of Nonlocal Quantum Communication. *arXiv:1409.5098*, September 2014, http://arxiv.org/abs/1409.5098